# FASCICULE DE BREVET EUROPEEN

(11) **EP 1 683 227 B1**
(45) Date de publication et mention de la délivrance du brevet: **15.08.2007**
(21) Numéro de dépôt: 04805391.2
(22) Date de dépôt: 04.11.2004
(51) Int. Cl.: H01M 10/40, H01M 10/04, H01M 10/36

(54) **MICRO-BATTERIE AU LITHIUM MUNIE D' UNE ENVELOPPE DE PROTECTION ET PROCEDE DE FABRICATION D'UNE TELLE MICRO-BATTERIE**
MIT EINER SCHUTZHÜLLE AUSGESTATTETE LITHIUM-MIKROBATTERIE UND VERFAHREN ZUR HERSTELLUNG EINER SOLCHEN MIKROBATTERIE
LITHIUM MICROBATTERY PROVIDED WITH A PROTECTIVE ENVELOPE, AND METHOD FOR PRODUCING ONE SUCH MICROBATTERY

(30) Priorité: 14.11.2003 FR 0313324
(43) Date de publication de la demande: 26.07.2006
(73) Titulaire: COMMISSARIAT A L'ENERGIE ATOMIQUE, 75752 Paris Cédex 15 (FR)
(72) Inventeur: ROCHE, Stéphanie, F-75012 Paris (FR); GAILLARD, Frédéric, F-38500 Voiron (FR); PLISSONNIER, Marc, F-38320 Eybens (FR); SALOT, Raphael, F-38250 Lans en Vercors (FR)
(74) Mandataire: Hecké, Gérard
(86) Numéro de dépôt international: PCT/FR2004/002841
(87) Numéro de publication internationale: WO 2005/050755

(56) Documents cités:
- WO-A-02/47187
- US-A- 5 326 652
- US-A- 5 561 004
- US-A- 6 025 094
- US-B1- 6 168 884
- PATENT ABSTRACTS OF JAPAN vol. 0090, no. 99 (E-311), 27 avril 1985 (1985-04-27) & JP 59 226472 A (HITACHI SEISAKUSHO KK), 19 décembre 1984 (1984-12-19)
- BATES J B ET AL: "Thin-film rechargeable lithium batteries" JOURNAL OF POWER SOURCES, ELSEVIER SEQUOIA S.A. LAUSANNE, CH, vol. 54, no. 1, 1 mars 1995 (1995-03-01), pages 58-62, XP004044511 ISSN: 0378-7753

## Description

### Domaine technique de l'invention

L'invention concerne une micro-batterie au lithium comportant un substrat sur lequel est disposé au moins un empilement comportant successivement une cathode, un électrolyte comportant du lithium et une anode en lithium métallique, une enveloppe de protection comportant au moins des première et seconde couches distinctes et superposées recouvrant l'empilement pour le protéger contre toute contamination extérieure.

L'invention concerne également un procédé de fabrication d'une telle micro-batterie au lithium, consistant à déposer successivement sur un substrat :
- au moins un empilement comportant une cathode, un électrolyte comportant du lithium et une anode en lithium métallique
- et une enveloppe de protection comportant au moins des première et seconde couches distinctes et superposées recouvrant l'empilement pour le protéger contre toute contamination extérieure.

### État de la technique

La pénétration de l'oxygène, de l'azote, du dioxyde de carbone et de l'humidité dans les micro-batteries comportant une anode en lithium métallique et un électrolyte à base de composés lithiés est connue pour être néfaste à leur fonctionnement. Pour éviter que les éléments lithiés de la micro-batterie au lithium et surtout le lithium de l'anode soient en contact avec l'environnement extérieur, il est connu de disposer une ou plusieurs couches de protection sur la micro-batterie de manière à l'encapsuler et à la préserver des gaz et de l'humidité.

A titre d'exemple, le document WO-A1-0247187 décrit une batterie au lithium comportant un substrat sur lequel sont successivement disposés un collecteur de courant, une cathode, un électrolyte, une anode, un collecteur de courant recouvrant totalement l'anode et une enveloppe de protection notamment contre la chaleur. L'enveloppe de protection est formée en déposant deux couches minces superposées sur la totalité du collecteur de courant. Puis, un recuit thermique est réalisé à environ 210°C avant de déposer une couche en résine époxy sur la totalité de l'empilement et de réaliser une insolation par rayonnements ultraviolets et un recuit à environ 260°C de la résine. Les deux couches minces sont en matériaux diélectriques tels que l'alumine, la silice, le nitrure de silicium, le carbure de silicium, l'oxyde de tantale, ces matériaux étant déposés par pulvérisation. Les deux couches peuvent également être en diamant ou en carbone quasi-diamant également connu sous le sigle DLC ("Carbon Like Diamant") et de préférence déposées par un dépôt chimique en phase vapeur assisté par plasma (PECVD ou "Plasma Enhanced Chemical Vapour Deposition"). Une telle enveloppe permet de protéger la batterie contre la chaleur, les gaz et les liquides, mais sa réalisation est longue et fastidieuse et elle nécessite deux recuits à des températures supérieures à 200°C. Or, des recuits supérieurs à 200°C ne sont acceptables que pour des batteries comportant une anode en matériaux lithiés. En effet, ils ne peuvent pas être employés avec une anode en lithium qui serait endommagée à des températures supérieures à 200°C.

Pour éviter de réaliser des recuits à des températures élevées, le document US5561004 propose de recouvrir l'anode en lithium par un écran pouvant être formé d'une couche ou d'une combinaison de couches en céramique, en métal ou en parylène®. Ces matériaux ont, cependant, une dureté et une épaisseur n'autorisant pas la mise sous pression de la batterie lors de son encapsulation.

### Objet de l'invention

L'invention a pour but de réaliser, une micro-batterie au lithium comportant une enveloppe de protection remédiant aux inconvénients mentionnés ci-dessus et permettant, en particulier, de réaliser la micro-batterie au lithium sur des substrats comportant des circuits intégrés et de préférence avec un procédé technologique continu.

Selon l'invention, ce but est atteint par le fait que la première couche, déposée sur la totalité de l'anode, comporte au moins un matériau chimiquement inerte par rapport au lithium, choisi parmi un carbure de silicium amorphe hydrogéné, un oxycarbure de silicium amorphe hydrogéné, du carbone amorphe hydrogéné, du carbone amorphe fluoré et du silicium amorphe hydrogène, la seconde couche comportant un matériau choisi parmi un carbonitrure de silicium amorphe hydrogéné ou un nitrure de silicium amorphe hydrogéné.

Selon un développement de l'invention, une couche intermédiaire est disposée entre les première et seconde couches, ladite couche intermédiaire comportant un matériau choisi parmi un oxyde de silicium dopé au phosphore, du carbone amorphe hydrogéné et du carbone amorphe fluoré.

Selon un mode de réalisation préférentiel, les première et seconde couches formant un empilement élémentaire, l'enveloppe de protection comporte une superposition d'au moins deux empilements élémentaires.

L'invention a également pour but un procédé de fabrication d'une telle micro-batterie facile à mettre en oeuvre et compatible avec les technologies de la microélectronique.

Selon l'invention, le procédé consiste à déposer successivement les première et seconde couches sur la totalité de l'anode, par dépôt chimique en phase vapeur assisté par plasma, à une température de dépôt inférieure ou égale à 150°C.

Selon un développement de l'invention, le procédé consiste, avant le dépôt de la seconde couche, à déposer une couche intermédiaire comportant un matériau choisi parmi un oxyde de silicium dopé au phosphore, du carbone amorphe hydrogéné et du carbone amorphe fluoré, par dépôt chimique en phase vapeur assisté par plasma, à une température de dépôt inférieure ou égale à 150°C.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 est une représentation schématique, en coupe, d'un mode particulier de réalisation d'une micro-batterie selon l'invention.
Les figures 2 à 5 représentent schématiquement, en coupe, des variantes de réalisation d'une micro-batterie selon l'invention.

### Description de modes particuliers de réalisation.

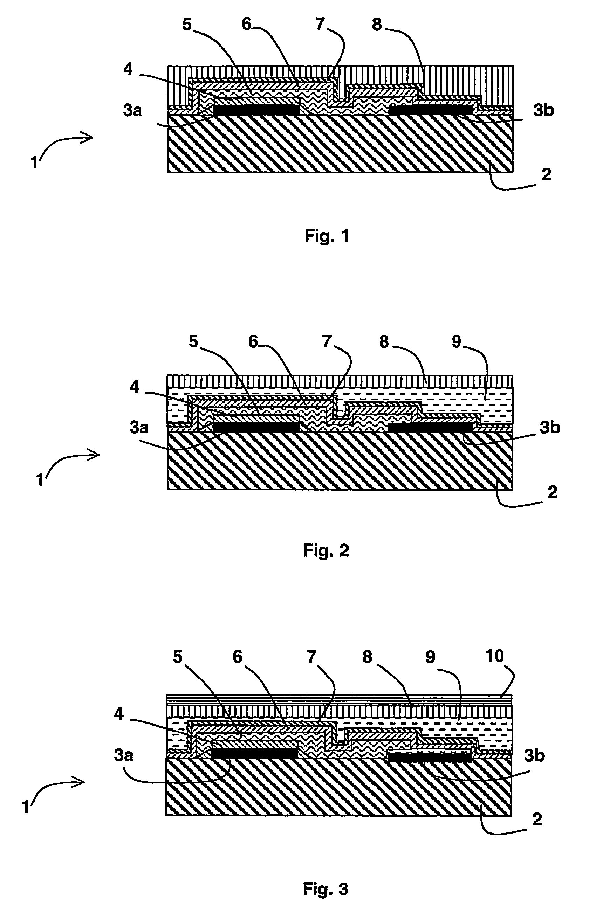

Comme représentée à la figure 1, une micro-batterie 1 au lithium comporte un substrat 2 sur lequel sont disposés successivement, sous forme de couches minces :
- des premier et second collecteurs de courant 3a et 3b, le premier collecteur de courant 3a étant totalement recouvert par une cathode 4,
- un électrolyte 5 comportant un composé lithié tel que de l'oxynitrure de lithium et de phosphore, plus connu sous le nom de LiPON, l'électrolyte 5 étant déposé de manière à recouvrir la cathode 4, la partie du substrat 2 séparant les premier et second collecteurs de courant 3a et 3b et une partie du deuxième collecteur 3b,
- une anode 6 en lithium métallique de manière à être en contact avec le substrat 2, l'électrolyte 5 et la partie libre du second collecteur de courant 3b.

La cathode 4, l'électrolyte 5 et l'anode 6 forment un empilement dit Electrode-Membrane-Electrode ou "EME". Pour protéger cet empilement et, plus particulièrement l'anode 6 en lithium métallique, contre toute contamination extérieure et surtout contre les gaz contenus dans l'air et contre l'humidité, une enveloppe de protection comportant au moins des première et seconde couches 7 et 8 superposées et distinctes est déposée sur la totalité de l'anode 4 de manière à recouvrir totalement l'empilement en formant une encapsulation. Ainsi, la première couche 7 est déposée sur la totalité de l'anode 6 puis elle est recouverte par la seconde couche 8. Les première et seconde couches 7 et 8 ont une épaisseur moyenne de l'ordre du micromètre.

La première couche 7 comporte au moins un matériau chimiquement inerte par rapport au lithium de manière à ne pas détériorer l'anode 6. Ainsi, le matériau de la première couche 7 est choisi parmi :
- un carbure de silicium amorphe hydrogéné ayant une formule générale SiCₓH_{z} avec 0<x<1 ou SiC:H,
- un oxycarbure de silicium amorphe hydrogéné ayant une formule générale SiOₓC_{y}H_{z} ou SiOₓC_{y}:H avec 0<x<2 et 0<y<1,
- du carbone amorphe hydrogéné de formule générale CH_{z} ou C:H,
- du carbone amorphe fluoré de formule générale CF_{z} ou C:F
- et du silicium amorphe hydrogèné de formule générale SiH_{z} ou Si:H.

Les première et seconde couches étant distinctes, la seconde couche comporte un matériau choisi parmi un carbonitrure de silicium amorphe hydrogéné de formule générale SiCₓN_{y}H_{z} ou SiCₓN_{Y}:H avec 0<x≤1 et 0<y≤1,33, un nitrure de silicium amorphe hydrogéné de formule générale SiNₓH_{z} ou SiNₓ:H avec 0<x≤1,33 et un carbone amorphe fluoré de formule générale CF_{X} avec 0<x≤2 ou C:F. Ainsi, lorsque la seconde couche comporte du carbone amorphe fluoré, la première couche comporte, de préférence, un matériau choisi parmi SiCₓH_{z} avec 0<x<1, SiOₓC_{y}H_{z} avec 0<x<2 et 0<y<1, CH_{z} et SiH_{z} alors que lorsque la première couche comporte du carbone amorphe hydrogène, la seconde couche comporte, de préférence un matériau choisi parmi SiCₓN_{y}H_{z} avec 0<x≤1 et 0<y≤1,33 et SiNₓH_{z} ou SiNₓ:H avec 0<x≤1,33.

Par un élément E hydrogéné, généralement noté EH_{z} ou E:H, ou un élément E' fluoré généralement noté E'F_{z} ou E':F on entend que, lors du dépôt d'une couche mince en élément E ou E', une proportion z d'hydrogène ou de fluor provenant d'un gaz précurseur contenant de l'hydrogène ou du fluor se lie à l'élément E ou E', de manière à former un élément E ou E' amorphe comportant de l'hydrogène ou du fluor.

Une telle enveloppe de protection joue le rôle de barrière entre l'anode 6 et l'atmosphère extérieure de manière à isoler l'anode 6 des gaz de l'air tels que l'azote, l'oxygène et le dioxyde de carbone ainsi que de l'humidité. En effet, la première couche étant directement en contact avec l'anode 6, elle est chimiquement et physiquement inerte par rapport au lithium de l'anode, ce qui permet de ne pas endommager l'anode 6 et elle est imperméable aux gaz. De plus, la seconde couche 7 comportant de l'azote, elle est imperméable à l'humidité. Enfin, les première et seconde couches 7 et 8 présentent de très bonnes performances mécaniques telles que leur dureté, supérieure à 2GPa alors que les polymères déposés à la tournette ont une dureté inférieure à 1 Gpa, et leur élasticité, ce qui permet de déposer des couches très fines sans qu'elles ne craquent. Une telle dureté permet notamment de mettre la micro-batterie sous pression sans qu'elle ne soit endommagée et donc d'utiliser des techniques usuellement utilisées dans le domaine de la microélectronique.

Ainsi, la micro-batterie au lithium 1, telle que représentée à la figure 1, est, de préférence, réalisée en déposant successivement les première et seconde couches sur la totalité de l'anode 6, par dépôt chimique en phase vapeur assisté par plasma (PECVD ou "Plasma Enhanced Chemical Vapor Deposition"), à une température de dépôt inférieure ou égale à 150°C, le dépôt PECVD. L'empilement EME ainsi que les collecteurs de courant peuvent être réalisés par un procédé de dépôt physique en phase vapeur (PVD ou "Physical Vapor Deposition") ou par vaporisation à basse température. Ainsi, le fait de réaliser un dépôt de couches minces à basse température permet de ne pas endommager la micro-batterie au lithium ainsi que le substrat sur lequel elle est disposée. Grâce à ce type de dépôt à basse température, il est alors possible, par exemple, d'intégrer les micro-batteries au lithium sur des substrats comportant des circuits intégrés, à moindre coût, sans qu'il soit nécessaire de les coller et tout en conservant la qualité des circuits intégrés.

Dans une première variante de réalisation destinée à augmenter l'efficacité de l'enveloppe de protection, une couche intermédiaire 9, distincte des première et seconde couches, peut être disposée entre les première et seconde couches 7 et 8, comme représentée à la figure 2. Elle comporte un matériau choisi parmi un oxyde de silicium dopé au phosphore dans une proportion, de préférence, inférieure ou égale à 10% en poids, du carbone amorphe hydrogéné et du carbone amorphe fluoré. Le phosphore dopant l'oxyde de silicium permet d'accroître les performances de protection des première et seconde couches 7 et 8, en piégeant les charges mobiles de type sodium ou potassium. La couche intermédiaire 9 peut également être réalisée par un dépôt PECVD à une température de dépôt inférieure ou égale à 150°C, avant le dépôt de la seconde couche. La couche intermédiaire 9 a, de préférence, une épaisseur moyenne de l'ordre du micromètre.

La micro-batterie au lithium 1 peut également comporter une couche finale en carbone amorphe hydrogéné ou en carbone amorphe fluoré, recouvrant la seconde couche 7 de l'enveloppe de protection, la couche finale étant distincte de la seconde couche 7. Ainsi, à la figure 3, une micro-batterie au lithium 1 telle que celle représentée à la figure 2 comporte une couche finale 10 disposée sur la seconde couche 7. La couche finale 10 présente une très grande caractéristique hydrophobique, ce qui renforce le rôle de barrière thermique de la seconde couche 7. Elle est également réalisée par un dépôt PECVD à une température de dépôt inférieure ou égale à 150°C. La couche finale 10 a une épaisseur moyenne de l'ordre du micromètre.

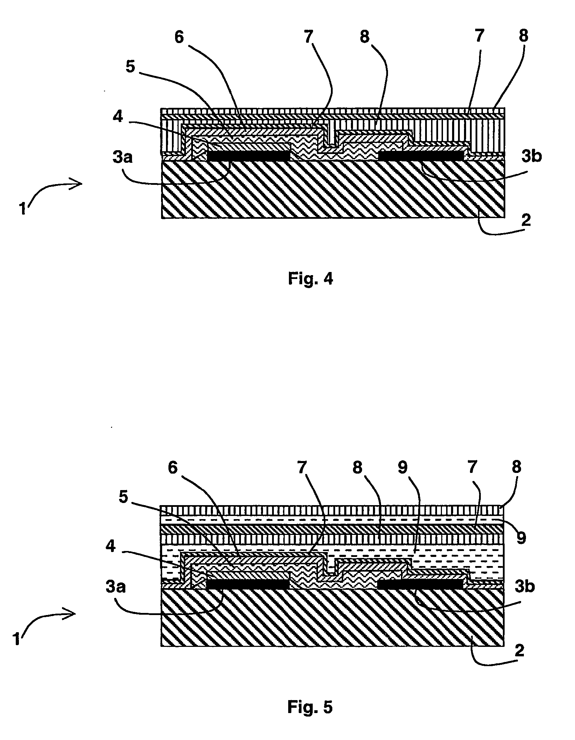

Dans une seconde variante de réalisation, les première et seconde couches 7 et 8 peuvent former un empilement élémentaire se réitérant, l'enveloppe de protection comportant alors une superposition d'au moins deux empilements élémentaires. Ainsi, à la figure 4, l'enveloppe de protection comporte une alternance de deux premières couches 7 et de deux secondes couches 8. Dans une variante représentée à la figure 5, l'enveloppe de protection comporte une superposition de deux empilements élémentaires comprenant chacun une couche intermédiaire 9 disposée entre les première et seconde couches 7 et 8 de l'empilement élémentaire.

## Revendications

1. Micro-batterie au lithium comportant un substrat (2) sur lequel est disposé au moins un empilement comportant successivement une cathode (4), un électrolyte (5) comportant du lithium et une anode (6) en lithium métallique, une enveloppe de protection comportant au moins des première et seconde couches (7, 8) distinctes et superposées recouvrant l'empilement pour le protéger contre toute contamination extérieure, micro-batterie (1) **caractérisée en ce que** la première couche (7), déposée sur la totalité de l'anode (4), comporte au moins un matériau chimiquement inerte par rapport au lithium, choisi parmi un carbure de silicium amorphe hydrogéné, un oxycarbure de silicium amorphe hydrogéné, du carbone amorphe hydrogéné, du carbone amorphe fluoré et du silicium amorphe hydrogène, la seconde couche (8) comportant un matériau choisi parmi un carbonitrure de silicium amorphe hydrogéné, un nitrure de silicium amorphe hydrogéné et du carbone amorphe fluoré.

2. Micro-batterie selon la revendication 1, **caractérisée en ce qu'**une couche intermédiaire (9) est disposée entre les première et seconde couches (7, 8), ladite couche intermédiaire (9) comportant un matériau choisi parmi un oxyde de silicium dopé au phosphore, du carbone amorphe hydrogéné et du carbone amorphe fluoré.

3. Micro-batterie selon la revendication 2, **caractérisée en ce que** le dopage en phosphore dans l'oxyde de silicium dopé au phosphore est inférieur ou égal à 10% en poids.

4. Micro-batterie selon l'une quelconque des revendications 1 à 3, **caractérisée en ce que** les première et seconde couches (7, 8) formant un empilement élémentaire, l'enveloppe de protection comporte une superposition d'au moins deux empilements élémentaires.

5. Micro-batterie selon l'une quelconque des revendications 1 à 4, **caractérisée en ce que** l'enveloppe de protection est recouverte d'une couche finale (10) en carbone amorphe hydrogéné ou en carbone amorphe fluoré.

6. Micro-batterie selon l'une quelconque des revendications 1 à 5, **caractérisée en ce que** chaque couche (7, 8, 9, 10) a une épaisseur de l'ordre du micromètre.

7. Procédé de fabrication d'une micro-batterie au lithium (1) selon l'une quelconque des revendications 1 à 6 consistant à déposer successivement sur un substrat (2) :
- au moins un empilement comportant une cathode (4), un électrolyte (5) comportant du lithium et une anode (6) en lithium métallique
- et une enveloppe de protection comportant au moins des première et seconde couches (7, 8) distinctes et superposées recouvrant l'empilement pour le protéger contre toute contamination extérieure,
procédé de fabrication **caractérisé qu'**il consiste à déposer successivement les première et seconde couches (7, 8) sur la totalité de l'anode (6), par dépôt chimique en phase vapeur assisté par plasma, à une température de dépôt inférieure ou égale à 150°C.

8. Procédé de fabrication d'une micro-batterie au lithium (1) selon la revendication 7, **caractérisé en qu'**il consiste, avant le dépôt de la seconde couche (8), à déposer une couche intermédiaire (9) comportant un matériau choisi parmi un oxyde de silicium dopé au phosphore, du carbone amorphe hydrogéné et du carbone amorphe fluoré, par dépôt chimique en phase vapeur assisté par plasma, à une température de dépôt inférieure ou égale à 150°C.

9. Procédé de fabrication d'une micro-batterie au lithium (1) selon l'une des revendications 7 et 8, **caractérisé en qu'**il consiste à déposer, sur la seconde couche (8), une couche finale (10) en carbone amorphe hydrogéné ou en carbone amorphe fluoré, par dépôt chimique en phase vapeur assisté par plasma, à une température de dépôt inférieure ou égale à 150°C.

## Claims

1. Lithium microbattery comprising a substrate (2) on which at least one stack is arranged, said stack successively comprising a cathode (4), an electrolyte (5) containing lithium and an anode (6) made of metallic lithium, a protective envelope comprising at least first and second distinct superposed layers (7, 8) covering the stack to protect same against any external contamination, microbattery (1) **characterized in that** the first layer (7), deposited on the whole of the anode (4), comprises at least one material that is chemically inert with regard to lithium, chosen from a hydrogenated amorphous silicon carbide, a hydrogenated amorphous silicon oxycarbide, hydrogenated amorphous carbon, fluorinated amorphous carbon and hydrogenated amorphous silicon, the second layer (8) comprising a material chosen from a hydrogenated amorphous silicon carbonitride, a hydrogenated amorphous silicon nitride and a fluorinated amorphous carbon.

2. Microbattery according to claim 1, **characterized in that** an intermediate layer (9) is arranged between the first and second layers (7, 8), said intermediate layer (9) comprising a material chosen from a phosphorus-doped silicon oxide, hydrogenated amorphous carbon and fluorinated amorphous carbon.

3. Microbattery according to the claim 2, **characterized in that** the phosphorus doping in the phosphorus-doped silicon oxide is less than or equal to 10% in weight.

4. Microbattery according to any one of the claims 1 to 3, **characterized in that** the first and second layers (7, 8) forming an elementary stack, the protective envelope comprises a superposition of at least two elementary stacks.

5. Microbattery according to any one of the claims 1 to 4, **characterized in that** the protective envelope is covered by a final layer (10) of hydrogenated amorphous carbon or of fluorinated amorphous carbon.

6. Microbattery according to any one of the claims 1 to 5, **characterized in that** each layer (7, 8, 9, 10) has a thickness of about one micrometer.

7. Method for producing a lithium microbattery (1) according to any one of the claims 1 to 6, consisting in successively depositing on a substrate (2):
- at least one stack comprising a cathode (4), an electrolyte (5) comprising lithium and an anode (6) made of metallic lithium,
- and a protective envelope comprising at least first and second distinct superposed layers (7, 8) covering the stack to protect same against external contamination,
method for producing **characterized in that** it consists in successively depositing the first and second layers (7, 8) on the whole of the anode (6), by plasma enhanced chemical vapor deposition, at a deposition temperature less than or equal to 150°C.

8. Method for producing a lithium microbattery (1) according to claim 7, **characterized in that** it consists in depositing an intermediate layer (9) by plasma enhanced chemical vapor deposition at a deposition temperature less than or equal to 150°C, before deposition of the second layer (8), said intermediate layer (9) comprising a material chosen from a phosphorus-doped silicon oxide, hydrogenated amorphous carbon and fluorinated amorphous carbon.

9. Method for producing a lithium microbattery (1) according to one of the claims 7 and 8, **characterized in that** it consists in depositing a final layer (10) of hydrogenated amorphous carbon or of fluorinated amorphous carbon on the second layer (8) by plasma enhanced chemical vapor deposition, at a deposition temperature less than or equal to 150°C.

## Patentansprüche

1. Lithium-Mikrobatterie mit einem Substrat (2), auf dem mindestens nacheinander eine Kathode (4), ein Lithium enthaltender Elektrolyt (5) und eine Anode (6) aus metallischem Lithium aufgeschichtet angeordnet sind, wobei eine Schutzhülle mindestens eine erste und eine zweite Schicht (7, 8) umfasst, die voneinander verschieden und übereinander angeordnet sind, welche die Aufschichtung bedeckt, um sie gegen jegliche äußere Verunreinigungen zu schützen, Mikrobatterie (1), die **dadurch gekennzeichnet ist, dass** die erste Schicht (7), die auf die ganze Anode (4) aufgebracht ist, mindestens ein Material umfasst, dass bezüglich dem Lithium chemisch inert ist und aus einem hydrierten amorphen Siliziumkarbid, einem hydrierten amorphen Siliziumoxikarbid, einem hydrierten amorphen Kohlenstoff, einem fluorierten amorphen Kohlenstoff und einem hydrierten amorphen Silizium ausgewählt ist, und die zweite Schicht ein Material umfasst, das aus einem hydrierten amorphen Siliziumkarbonitrid, einem hydrierten amorphen Siliziumnitrid und fluoriertem amorphen Kohlenstoff ausgewählt ist.

2. Mikrobatterie nach Anspruch 1, **dadurch gekennzeichnet, dass** zwischen der ersten und zweiten Schicht (7, 8) eine Zwischenschicht (9) angeordnet ist, welche Zwischenschicht (9) ein Material umfasst, das aus einem phosphordotieren Siliziumoxid, hydriertem amorphen Kohlenstoff und fluoriertem amorphen Kohlenstoff ausgewählt ist.

3. Mikrobatterie nach Anspruch 2, **dadurch gekennzeichnet, dass** die Phosphordotierung in dem phosphordotierten Siliziumoxid unter oder gleich 10

4. Mikrobatterie nach einem der Ansprüche 1 bis 3, **dadurch gekennzeichnet, dass** die Schutzhülle, nachdem die erste und zweite Schicht (7, 8) eine elementare Aufschichtung bilden, die Anordnung mindestens zweier elementarer Aufschichtungen übereinander umfasst.

5. Mikrobatterie nach einem der Ansprüche 1 bis 4, **dadurch gekennzeichnet, dass** die Schutzhülle mit einer Endschicht (10) aus hydriertem amorphen Kohlenstoff oder fluoriertem amorphen Kohlenstoff bedeckt ist.

6. Mikrobatterie nach einem der Ansprüche 1 bis 5, **dadurch gekennzeichnet, dass** jede Schicht (7, 8, 9, 10) eine mittlere Dicke von etwa einem Mikrometer hat.

7. Herstellungsverfahren für eine Lithium-Mikrobatterie (1) nach einem der Ansprüche 1 bis 6, das darin besteht, nacheinander auf ein Substrat (2) aufzubringen:
- mindestens eine Aufschichtung aus einer Kathode (4), einem Lithium enthaltenden Elektrolyten (5) und einer Anode (6) aus metallischem Lithium
- und eine Schutzhülle, die mindestens eine erste und zweite Schicht (7, 8) umfasst, die voneinander verschieden und übereinander angeordnet sind, welche die Aufschichtung überdeckt, um sie gegen jegliche äußeren Verunreinigungen zu schützen,
Herstellungsverfahren, das **dadurch gekennzeichnet ist, dass** es darin besteht, nacheinander die erste und zweite Schicht (7, 8) auf die gesamte Anode (6) aufzubringen, und zwar durch plasmaunterstützte Gasphasenabscheidung bei einer Aufdampftemperatur von unter oder gleich 150°C.

8. Herstellungsverfahren für eine Lithium-Mikrobatterie (1) nach Anspruch 7, **dadurch gekennzeichnet, dass** es darin besteht, vor dem Aufdampfen der zweiten Schicht (8) eine Zwischenschicht (9) aufzudampfen, die ein Material enthält, das aus phosphordotiertem Siliziumoxid, hydriertem amorphen Kohlenstoff oder fluoriertem amorphen Kohlenstoff ausgewählt ist, und zwar durch plasmaunterstützte Gasphasenabscheidung bei einer Aufdampftemperatur von unter oder gleich 150°C.

9. Herstellungsverfahren für eine Lithium-Mikrobatterie (1) nach einem der Ansprüche 7 und 8, **dadurch gekennzeichnet, dass** es darin besteht, auf die zweite Schicht (8) eine Endschicht (10) aus hydriertem amorphen Kohlenstoff oder fluoriertem amorphen Kohlenstoff aufzudampfen, und zwar durch plasmaunterstützte Gasphasenabscheidung bei einer Aufdampftemperatur von unter oder gleich 150°C.
